# EUROPÄISCHE PATENTSCHRIFT

(11) **EP 0 524 202 B1**
(45) Veröffentlichungstag und Bekanntmachung des Hinweises auf die Patenterteilung: **28.06.1995**
(21) Anmeldenummer: 91905799.2
(22) Anmeldetag: 23.03.1991
(51) Int. Cl.: F02P 5/15

(54) **VERFAHREN ZUR ZÜNDWINKELVERSTELLUNG BEI LASTÄNDERUNGEN**
PROCESS FOR ADJUSTING THE IGNITION TIMING AS THE LOAD CHANGES
PROCEDE DE REGLAGE DU MOMENT D'ALLUMAGE TENANT COMPTE DES VARIATIONS DE CHARGE

(30) Priorität: 07.04.1990 DE 4011386
(43) Veröffentlichungstag der Anmeldung: 27.01.1993
(73) Patentinhaber: ROBERT BOSCH GMBH, 70442 Stuttgart (DE)
(72) Erfinder: FOERSTER, Siegmar, D-7110 Oehringen (DE); ZIMMERMANN, Juergen, D-7141 Schwieberdingen (DE); MENCHER, Bernhard, D-7141 Schwieberdingen (DE)
(86) Internationale Anmeldenummer: DE9100262
(87) Internationale Veröffentlichungsnummer: WO9115676

(56) Entgegenhaltungen:
- EP-A- 0 167 652
- EP-A- 0 233 449
- EP-A- 0 284 054
- EP-A- 0 337 491
- DE-A- 3 519 476
- DE-A- 3 526 409
- US-A- 4 498 438
- Patent Abstract of Japan, vol. 10, No. 281 (M-520)(2337), 25 September 1986 & JP-A-61 101 677

## Beschreibung

### Stand der Technik

Die Erfindung betrifft ein Verfahren zur Zündwinkelverstellung nach erkannter Lastdynamik einer Brennkraftmaschine, wobei beim Überschreiten einer bestimmten, einer Lastvergrößerung zugeordneten Lastdynamikschwelle ausgehend von einem vorgegebenen Zündwinkelgrundwert eine Spätverstellung des Zündwinkels erfolgt. Der vorgegebene Zündwinkelgrundwert kann aus einer Kennlinie oder einem Kennfeld entstammen. Er kann auch als Festwert gespeichert sein.

In der modernen Kraftfahrzeugelektronik wird die Brennkraftmaschine eines Fahrzeugs mit einem Steuergerät betrieben. Dieses bildet aus verschiedenen Betriebsparametern den jeweils optimalen Betriebspunkt, der unter anderem von dem errechneten Zündwinkel bestimmt ist. Um den Betrieb in unerwünschten Betriebspunkten zu vermeiden, ist eine Dynamikvorhaltung bekannt. Hierunter versteht man die Spätverstellung des Zündwinkels nach erkannter Lastdynamik. Wenn also die Last der Brennkraftmaschine einer derart großen Laständerung unterliegt, daß eine Lastdynamikschwelle überschritten wird, so kommt es zu einer Spätverstellung des Zündwinkels. Der Zündwinkel setzt sich aus einem Zündwinkelgrundwert, der -in Abhängigkeit von verschiedenen Parametern- einem Kennfeld entstammt, und einem additiven Korrekturwert, der sich aus der genannten Lastdynamik ergibt zusammen. In Abhängigkeit von der Laständerung wird daher der Korrekturwert des Zündwinkels bestimmt und dann zum Zündwinkelgrundwert addiert. Insgesamt ergibt sich hieraus ein neuer Zündwinkel, der der Lastdynamik Rechnung trägt.

### Vorteile der Erfindung

Das erfindungsgemäße Verfahren mit den im Hauptanspruch genannten Merkmalen hat demgegenüber den Vorteil, daß nach einer erkannten Laständerung ein neuer Zündwinkel auf besonders einfache Weise vorgegeben wird. An die Stelle des vor Eintritt der Laständerung geltenden Zündwinkelgrundwerts tritt unmittelbar ein neuer, im Wert kleinerer Basiswert für den Zündwinkel, das heißt, es erfolgt eine Spätverstellung des Zündwinkels auf einen applizierbaren Betrag. Im Gegensatz zum Stand der Technik, bei dem eine Spätverstellung um einen applizierbaren Betrag erfolgt, das heißt, zu einem Zündwinkelgrundwert wird ein Korrekturwert addiert, wird der Zündwinkelgrundwert beim erfindungsgemäßen Verfahren ersetzt durch einen neuen, kleineren und damit eine Spätverstellung beinhaltenden Basiswert. Dies erspart Rechenzeit und vermindert RAM-und/oder ROM-Bedarf. Beim erfindungsgemäßen Verfahren ist es ferner nicht notwendig, bestimmte durch den Betrieb der Brennkraftmaschine vorgegebene Festwerte aufgrund der erfolgten Applikation anzupassen. Vielmehr wird der vorzugsweise aus einem Kennfeld stammende Zündwinkelgrundwert ohne Rechnung oder dergleichen nach erkannter Lastdynamik durch den neuen, der weiteren Betriebsführung zugrundezulegenden Basiswert ersetzt. Dieses direkte Ersetzen wird im Hauptanspruch durch das Wort "unmittelbar" verdeutlicht.

Nach einer Weiterbildung der Erfindung kann dieser Basiswert einem bestimmten Parameterniveau der Brennkraftmaschine zugeordnet sein. Insbesondere kommt als Parameterniveau ein bestimmtes Lastniveau in Frage. Besonders vorteilhaft ist es, wenn der neue Basiswert dem Vollastniveau der Brennkraftmaschine zugeordnet ist. Dies bedeutet, daß eine Spätverstellung des Zündwinkels bis zu einer Vollast-Linie erfolgt, wobei die Vollast-Linie dem Zündwinkel zugeordnet ist, der von der Brennkraftmaschine im Vollastbetrieb eingenommen wird. Es liegt jedoch auch im Rahmen der Erfindung, wenn andere, vorgebbare Lastniveaus, die unterhalb des Vollastniveaus liegen, als Basiswert herangezogen werden.

Grundsätzlich ist es möglich, daß beim Überschreiten der Lastdynamikschwelle der Zündwinkel durch Spätverstellung einen festen Basiswert annimmt. Alternativ kann jedoch auch vorgesehen sein, daß der Basiswert einem Lastdynamikkennfeld entstammt und somit von der Größe der Laständerung abhängig ist.

Nach einer bevorzugten Ausführungsform der Erfindung ist eine Klopferkennung während der durch Lastdynamik ausgelösten Zündwinkelverstellung inaktiv. Bei der genannten Klopferkennung erfolgt -im statischen Betrieb- ebenfalls eine Zündwinkelspätverstellung, die -nach einem bestimmten Algorithmus- schrittweise wieder zurückgenommen wird, bis der Zündwinkelgrundwert wieder erreicht ist oder erneutes Klopfen eines Zylinders der Brennkraftmaschine auftritt. Diese Zündwinkel-Klopfverstellung ist jedoch nicht aktiv, wenn aufgrund einer Laständerung eine Zündwinkelverstellung erfolgt.

Vorzugsweise wird der Basiswert einer neuen Zündwinkelberechnung zugrundegelegt. Mithin dient der Basiswert als Berechnungsgrundlage für die spezielle, von bestimmten Betriebsparametern der Brennkraftmaschine abhängige Zündwinkelbestimmung.

Nach einer Weiterbildung der Erfindung erfolgt eine Rückführung des Zündwinkels aus der Spätlage erst dann, wenn ein dem neuen Betriebszustand der Brennkraftmaschine entsprechender Zündwinkel berechnet ist. Mithin wird nach dem Überschreiten der vorgegebenen Lastdynamikschwelle der Zündwinkel auf den neuen Basiswert angehoben, wobei dieser Basiswert so lange erhalten bleibt, bis aufgrund des neuen Betriebszustandes der zugehörigen Zündwinkel -der einen optimalen Betrieb garantiert- berechnet ist. Erst dann erfolgt eine Verstellung des Zündwinkels in Richtung "Früh". Diese Verstellung beziehungsweise Rückführung des Zündwinkels geschieht vorzugsweise in änderungsbegrenzten Schritten. Hierunter ist eine stufenförmige Rückführung zu verstehen, wobei die einzelnen Stufen jedoch gegenüber der "Einmalstufe" bei der Spätverstellung relativ klein sind.

### Zeichnung

Die Erfindung wird im folgenden anhand der Figuren näher erläutert. Es zeigen:
- Figur 1: ein Zündwinkel-Zeit-Diagramm,
- Figur 2: ein Last-Zeit-Diagramm,
- Figur 3: ein zur Figur 2 gehörendes Zündwinkel-Zeit-Diagramm,
- Figur 4: ein Blockschaltbild und
- Figur 5: ein Flußdiagramm zum erfindungsgemäßen Verfahren.

### Beschreibung von Ausführungsbeispielen

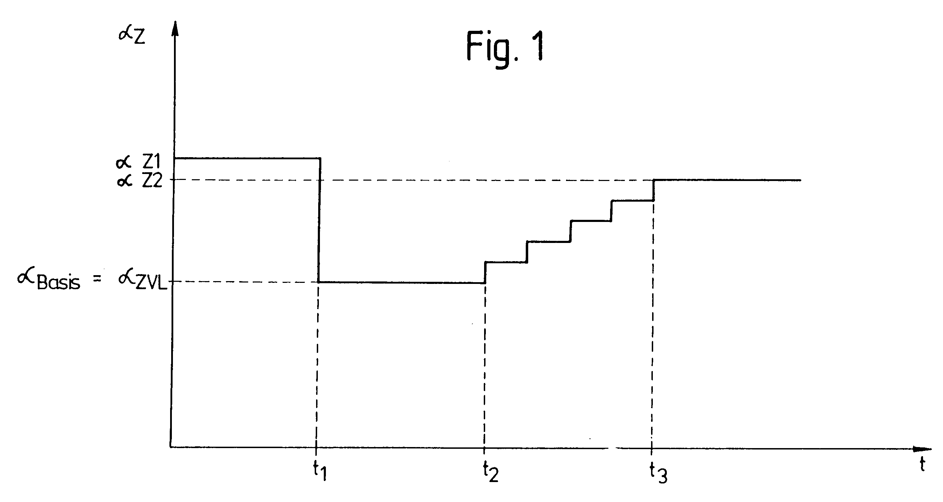

Die Figur 1 zeigt ein Diagramm, bei dem auf der Ordinate der Zündwinkel α_{z} einer Brennkraftmaschine und auf der Abszisse die Zeit t dargestellt ist. Anstelle der Zeit t können dort auch die Zündintervalle der Brennkraftmaschine aufgetragen sein.

Es ist erkennbar, daß bis zum Zeitpunkt t₁ die Brennkraftmaschine mit einem Zündwinkel α_{z1} betrieben wird. Es sei angenommen, daß zum Zeitpunkt t₁ die Brennkraftmaschine einer Laständerung unterliegt, die zu einer derartigen Lastvergrößerung führt, daß eine vorgebbare Lastdynamikschwelle überschritten wird. Dies hat zur Folge, daß der bisherige Zündwinkel α_{z1}, der einen aus einem Kennfeld stammenden Zündwinkelgrundwert darstellt, auf einen Basiswert α_{Basis} zurückgenommen wird. Mithin erfolgt eine sprunghafte Zündwinkelverstellung in Richtung "Spät". Der Basiswert α_{Basis} kann vorzugsweise einem bestimmten Parameterniveau der Brennkraftmaschine zugeordnet sein. Aus der Figur 1 geht hervor, daß als Parameterniveau hier das Lastniveau, nämlich das Vollastniveau, der Brennkraftmaschine herangezogen wird. Damit entspricht der Basiswert α_{Basis} Zündwinkel α_{zVL}, der bei Vollast der Brennkraftmaschine angenommen würde.

Ausgehend vom Zeitpunkt t₁ wird nunmehr eine neue Zündwinkelberechnung durchgeführt. Erst wenn diese abgeschlossen ist (Zeitpunkt t₂) erfolgt eine Rückführung des Zündwinkels α_{z}. Diese Rückführung wird stufenweise in änderungsbegrenzten Schritten vorgenommen. Hierunter sind in Stufenhöhe und Stufenbreite begrenzte Rückführungsintervalle zu verstehen, die aus der Figur 1 im Zeitraum zwischen den Zeitpunkten t₂ und t₃ ersichtlich sind.

Im Zeitpunkt t₃ ist der neu berechnete Zündwinkel α_{z2} erreicht. Die weitere Betriebsführung erfolgt daher mit diesem neuen Zündwinkel α_{z2}.

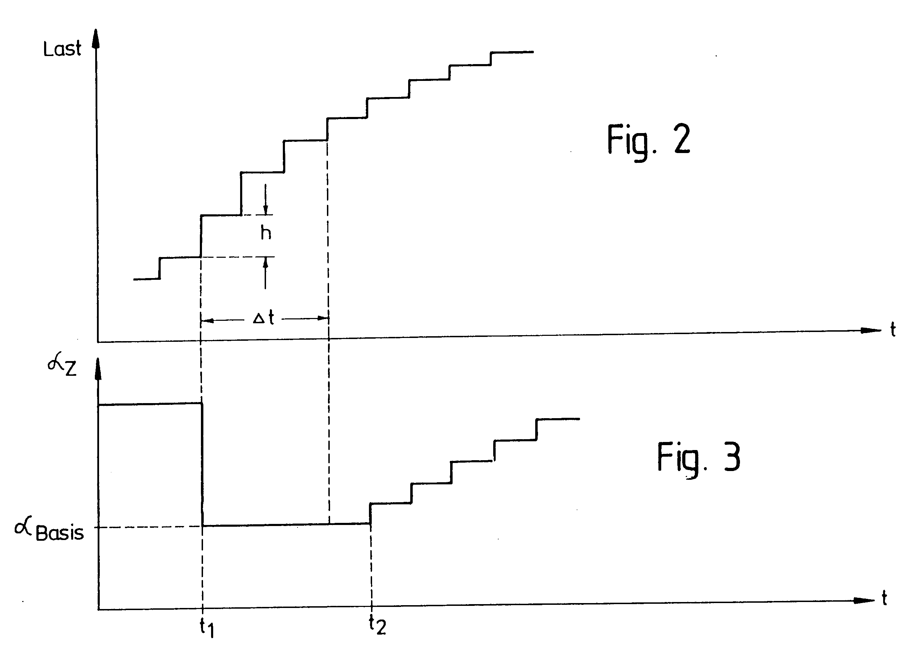

Die Figuren 2 und 3 verdeutlichen nochmals das erfindungsgemäße Verfahren. Die Figur 2 zeigt ein Diagramm, bei dem auf der Ordinate die Last der Brennkraftmaschine und auf der Abszisse die Zeit dargestellt ist. Es sei angenommen, daß in dem Intervall Δt eine derartige Lastdynamik vorliegt, daß eine vorgegebenen Lastdynamikschwelle überschritten wird. Das überschreiten wird durch Ermittlung der Stufenhöhe h der Laständerung erkannt. Aus der zugehörigen Figur 3 ergibt sich nun, daß zu Beginn des Intervalls Δt die erfindungsgemäß Zündwinkelspätverstellung auf den Basiswert α_{Basis} erfolgt. Ab dem Zeitpunkt t₂, in dem -wie bereits erwähnt- der neue Zündwinkel ermittelt ist, erfolgt dann die Rückführung des Zündwinkels α_{z}.

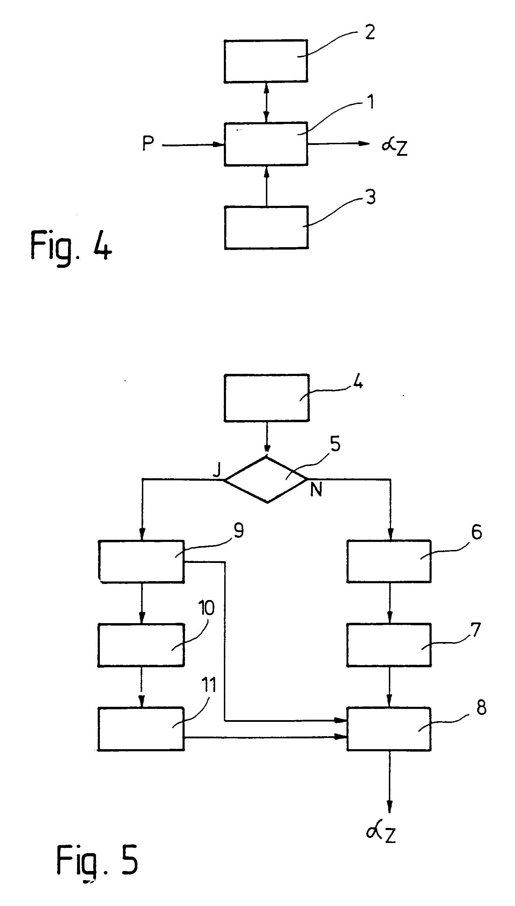

Die Figuren 4 und 5 zeigen einen Block- und ein Flußdiagramm, die das erfindungsgemäße Verfahren verdeutlichen. Einem Rechner 1, der Bestandteil eines Steuergeräts der Brennkraftmaschine sein kann, werden Betriebsparameter P der Brennkraftmaschine zugeführt. Als Betriebsparameter P kommt z. B. die Drehzahl, die Temperatur, die Last usw. der Brennkraftmaschine in Frage. Der Rechner 1 ist mit einem Speicher 2 und mit einer Vorgabeschaltung 3 verbunden. Im Speicher 2 sind die Zündwinkelgrundwerte, vorzugsweise als Kennfeld, und die Basiswerte gespeichert. Die Vorgabeschaltung gibt die Lastdynamikschwelle vor. Als Ausgangsgröße liefert der Rechner den zur Betriebsführung zu verwendenden Zündwinkel α_{z}.

Im Startfeld 4 des Flußdiagramms (Figur 5) erfolgt der Betrieb der Brennkraftmaschine mit einem bestimmten Zündwinkel α_{z}. Im Schritt 5 geschieht die Abfrage, ob die vorgegebene Lastdynamikschwelle überschritten wird. Hierbei bedeutet "J" = "Ja" und "N" = "Nein". Erfolgt keine Überschreitung der Lastdynamikschwelle, so wird im Schritt 6 der Zündwinkelgrundwert vom Kennfeld zur Verfügung gestellt. Im Schritt 7 ist eine Zündwinkeländerungsbegrenzung vorgesehen. Die Ausgabe (Schritt 8) stellt den aktuellen Zündwinkel α_{z} zur Verfügung, mit dem der Betrieb der Brennkraftmaschine erfolgt.

Überschreitet die Last der Brennkraftmaschine die Lastdynamikschwelle, so wird im Schritt 9 unmittelbar vom bisherigen Zündwinkel auf einen neuen Basiswert ohne Berechnung oder dergleichen übergegangen. Mit diesem neuen Zündwinkel erfolgt zunächst der weitere Betrieb der Brennkraftmaschine. Nachfolgend wird dann im Schritt 10 ein neuer Zündwinkel berechnet, wobei die momentan vorliegenden Betriebsdaten Berücksichtigung finden. Ist der neue Zündwinkel festgestellt, so erfolgt im Schritt 11 die Rückführung auf diesen berechneten Wert.

Sofern die Brennkraftmaschine mit einer Klopferkennung versehen ist, das heißt, bei dem Auftreten des Klopfens eines Zylinders ebenfalls eine Zündwinkelspätverstellung vorgenommen wird, ist diese Klopferkennung so lange inaktiv, bis eine Zündwinkelverstellung aufgrund erkannter Lastdynamik abgeschlossen ist.

Nach einem bevorzugten Ausführungsbeispiel ist es möglich, daß der Basiswert nicht als bestimmte Größe, die gegebenenfalls noch von einem Parameterniveau der Brennkraftmaschine abhängig ist, vorgegeben wird, sondern daß dieser aus einem Lastdynamikkennfeld entstammt und daher in seiner Größe von der Größe der Laständerung abhängig ist.

## Patentansprüche

1. Verfahren zur Zündwinkelverstellung nach erkannter Lastdynamik einer Brennkraftmaschine, wobei beim Überschreiten einer bestimmten, einer Lastvergrößerung zugeordneten Lastdynamikschwelle ausgehend von einem vorgegebenen Zündwinkelgrundwert eine Spätverstellung des Zündwinkels erfolgt, **da****durch gekennzeichnet**, daß nach erkannter Lastdynamik an die Stelle des Zündwinkelgrundwerts (α_{z1}) unmittelbar ein neuer, im Wert kleinerer Basiswert (α_{Basis}) für den Zündwinkel (α₂) tritt.

2. Verfahren nach Anspruch 1, **dadurch gekennzeichnet**, daß der Basiswert (α_{Basis}) einem bestimmten Parameterniveau der Brennkraftmaschine zugeordnet ist.

3. Verfahren nach einem der vorhergehenden Ansprüche, **dadurch gekennzeichnet**, daß der Basiswert (α_{Basis}) einem bestimmten Lastniveau zugeordnet ist.

4. Verfahren nach einem der vorhergehenden Ansprüche, **dadurch gekennzeichnet**, daß der Basiswert (α_{Basis}) dem Vollastniveau der Brennkraftmaschine zugeordnet ist.

5. Verfahren nach einem der vorhergehenden Ansprüche, **dadurch gekennzeichnet**, daß der Basiswert (α_{Basis}) einem Lastdynamikkennfeld entstammt.

6. Verfahren nach einem der vorhergehenden Ansprüche, **dadurch gekennzeichnet**, daß eine Klopferkennung während der durch Lastdynamik ausgelösten Zündwinkelverstellung inaktiv ist.

7. Verfahren nach einem der vorhergehenden Ansprüche, **dadurch gekennzeichnet**, daß nach dem Einstellen des Basiswerts (α_{Basis}) eine neue Zündwinkelberechnung erfolgt.

8. Verfahren nach einem der vorhergehenden Ansprüche, **dadurch gekennzeichnet**, daß eine Rückführung des Zündwinkels (α_{zVL}) aus der Spätlage erst dann erfolgt, wenn ein dem neuen Betriebszustand der Brennkraftmaschine entsprechender Zündwinkel (α_{z2}) berechnet ist.

9. Verfahren nach einem der vorhergehenden Ansprüche, **dadurch gekennzeichnet**, daß die Rückführung in änderungsbegrenzten Schritten erfolgt.

## Claims

1. Method for ignition angle adjustment, after a dynamic change in load has been recognised in an internal combustion engine, in which the ignition angle is retarded, starting from a specified basic ignition angle, when a certain dynamic load change threshold associated with an increase in load is exceeded, characterised in that after the dynamic change in load has been recognised, a new and smaller base value (α_{Basis}) for the ignition angle (α_{Z}) appears immediately in place of the basic ignition angle (α_{Z1}).

2. Method according to Claim 1, characterised in that the base value (α_{Basis}) is associated with a certain parameter level of the internal combustion engine.

3. Method according to one of the preceding claims, characterised in that the base value (α_{Basis}) is associated with a certain load level.

4. Method according to one of the preceding claims, characterised in that the base value (α_{Basis}) is associated with the full-load level of the internal combustion engine.

5. Method according to one of the preceding claims, characterised in that the base value (α_{Basis}) is derived from a dynamic change in load characteristic field.

6. Method according to one of the preceding claims, characterised in that a knock recognition system is inactive during the ignition angle adjustment initiated by the dynamic change in load.

7. Method according to one of the preceding claims, characterised in that a new ignition angle calculation takes place after the setting of the base value (α_{Basis}).

8. Method according to one of the preceding claims, characterised in that restoration of the ignition angle (α_{ZVL}) from the retarded setting only takes place when an ignition angle (α_{Z2}) corresponding to the new operating condition of the internal combustion engine has been calculated.

9. Method according to one of the preceding claims, characterised in that the restoration takes place in limited-change steps.

## Revendications

1. Procédé de réglage de l'angle d'allumage à partir de la perception de la dynamique de la charge dans un moteur à combustion interne, selon lequel le franchissement d'un seuil de cette dynamique, défini en association avec un accroissement de la charge , entraîne, à partir d'une valeur fondamentale de l'angle d'allumage, donnée à l'avance, un déplacement de l'angle d'allumage vers le retard, caractérisé en ce que, après reconnaissance de la dynamique de la charge, la valeur fondamentale de l'angle d'allumage (α_{z1}) est directement remplacée par une nouvelle valeur de base (α_{basis}) plus petite, donnée à l'angle d'allumage (α_{z})

2. Procédé selon la revendication 1, caractérisé en ce que la valeur de base (α_{basis}) est associée à un niveau défini d'un paramètre de fonctionnement du moteur.

3. Procédé selon une des revendications précédentes, caractérisé en ce que la valeur de base (α_{basis}) est associée à un niveau défini de charge du moteur.

4. Procédé selon une des revendications précédentes, caractérisé en ce que la valeur de base (α_{basis}) est associée au niveau de pleine charge du moteur .

5. Procédé selon une des revendications précédentes, caractérisé en ce que la valeur de base (α_{basis}) est prise dans un champ de caractéristiques de la dynamique de la charge du moteur.

6. Procédé selon une des revendications précédentes, caractérisé en ce qu'une détection du cognement est rendue inactive pendant le réglage de l'allumage à partir de la dynamique de la charge.

7. Procédé selon une des revendications précédentes, caractérisé en ce qu'après réglage de la valeur de base (α_{basis}), l'angle d'allumage est à nouveau calculé.

8. Procédé selon une des revendications précédentes, caractérisé en ce qu'un retour de l'angle d'allumage (α_{zv1}) à partir de la position à retard n'a lieu qu'après que le calcul ait déterminé un angle d'allumage (α_{z2}) correspondant au nouvel état de fonctionnement du moteur.

9. Procédé selon une des revendications précédentes, caractérisé en ce que le retour a lieu par étapes à variation limitée.
